(19) Europäisches Patentamt
European Patent Office
Office européen des brevets

(11) EP 1 511 782 B1

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: **03755108.2**

(22) Anmeldetag: **21.05.2003**

(51) Int Cl.:
***C08F 285/00*** *(2006.01)*

(86) Internationale Anmeldenummer:
**PCT/EP2003/005309**

(87) Internationale Veröffentlichungsnummer:
**WO 2003/099889 (04.12.2003 Gazette 2003/49)**

(54) **VERFAHREN ZUR HERSTELLUNG EINER WÄSSRIGEN POLYMERISATDISPERSION**

METHOD FOR PRODUCING AN AQUEOUS POLYMER DISPERSION

PROCEDE DE FABRICATION D'UNE DISPERSION DE POLYMERISAT AQUEUSE

(84) Benannte Vertragsstaaten:
**AT BE BG CH CY CZ DE DK EE ES FI FR GB GR HU IE IT LI LU MC NL PT RO SE SI SK TR**

(30) Priorität: **27.05.2002 DE 10223615**

(43) Veröffentlichungstag der Anmeldung:
**09.03.2005 Patentblatt 2005/10**

(73) Patentinhaber: **BASF Aktiengesellschaft**
**67056 Ludwigshafen (DE)**

(72) Erfinder:
- **WULFF, Dirk**
**67105 Schifferstadt (DE)**
- **FELDTHUSEN JENSEN, Jesper**
**55129 Mainz (DE)**
- **AUCHTER, Gerhard**
**67098 Bad Dürkheim (DE)**
- **WILDBURG, Gerald**
**67346 Speyer (DE)**
- **FINK, Ralf**
**67105 Schifferstadt (DE)**

(56) Entgegenhaltungen:
**EP-A- 0 222 127**
**EP-A- 0 890 593**
**DE-A- 19 633 967**
**US-A- 4 997 859**

EP 1 511 782 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung einer wässrigen Polymerisatdispersion mit einem Polymerisatfeststoffgehalt ≥ 50 Gew.-% durch radikalisch initiierte wässrige Emulsionspolymerisation von ethylenisch ungesättigten Verbindungen (Monomere), das dadurch gekennzeichnet ist, dass
a) eine Mischung enthaltend

| | |
|---|---|
| Teilmenge 1 | entionisiertes Wasser, |
| 0,001 bis 0,5 Gew.-Teile | Polymersaat mit einem gewichtsmittleren Teilchendurchmesser ≤ 100 nm, |
| 0,0001 bis 0,1 Gew.-Teile | Dispergiermittel, und |
| 0,5 bis 10 Gew.-Teile | Monomere |

in einem Polymerisationsgefäß vorgelegt wird und die Monomere bis zu einem Umsatz von ≥ 80 % polymerisiert werden [Polymerisationsstufe A], und man
b) daran anschließend dem erhaltenen Reaktionsgemisch unter Polymerisationsbedingungen eine Monomerenemulsion enthaltend

| | |
|---|---|
| Teilmenge 2 | entionisiertes Wasser, |
| 0,1 bis 5 Gew.-Teile | Dispergiermittel, und |
| 90 bis 99,5 Gew.-Teile | Monomere |

zuführt [Polymerisationsstufe B], wobei
c) die Gesamtmenge der zur Polymerisation eingesetzten Monomere 100 Gew.-Teile und die Gesamtmenge an entionisiertem Wasser ≤ 100 Gew.-Teile beträgt.

Ferner betrifft die vorliegende Anmeldung die Verwendung der nach dem erfindungsgemäßen Verfahren erhaltenen wässrigen Polymerisatdispersionen als Bindemittel, zur Modifizierung von Zement- und Mörtelformulierungen sowie als Klebstoff, insbesondere Haftklebstoff.

Ebenso wie Polymerisatlösungen beim Verdampfen des Lösungsmittels, weisen wässrige Polymerisatdispersionen beim Verdampfen des wässrigen Dispersionsmediums die Eigenschaft auf, Polymerisatfilme zu bilden, weshalb wässrige Polymerisatdispersionen in vielfacher Weise als Bindemittel, z.B. für Anstrichfarben oder für Massen zum Beschichten von Leder, Papier oder Kunststoffolien Anwendung finden.

Wässrige Polymerisatdispersionen mit hohem Polymerisatanteil sind insofern von besonderem Vorteil, als einerseits ihr relativ geringerer Anteil an wässrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wässriger Phase als Trägermedium gelagert und transportiert werden kann.

Von Nachteil ist jedoch, daß mit zunehmender Volumenkonzentration (US-A 4,130,523) des Polymerisats die Herstellung wässriger Polymerisatdispersionen problembehaftet ist. So nimmt einerseits der Fließwiderstand (die Viskosität) zu und erschwert sowohl die Abführung der Reaktionswärme als auch die Verarbeitung der wässrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wässrigen Polymerisatdispersionen und sind daher in der Regel unerwünscht.

Nach Untersuchungen über den Fließwiderstand wässriger Polymerisatdispersionen weisen solche mit einer bimodalen bzw. breiten Größenverteilung (polydispers) der dispergierten Polymerisatteilchen bei gleichem Feststoffgehalt in der Regel einen geringeren Fließwiderstand auf, als solche mit einer engen Größenverteilung (im Grenzfall monodispers). Ferner zeigen grobteilige wässrige Polymerisatdispersionen unter der Prämisse gleichen Feststoffgehalts einen geringeren Fließwiderstand als feinteilige wässrige Polymerisatdispersionen.

Aus der DE-A 19633967 sind gut filtrierbare und desodorierbare wässrige Haftklebstoffdispersionen mit Feststoffgehalten über 65 Gew.-% bekannt, welche durch ein spezielles Monomerenzulaufverfahren hergestellt werden. Dabei wird 1 bis 10 Gew.-% der Monomerengesamtmenge als Monomerenemulsion innerhalb von ¼ bis 1 h in pro Zeiteinheit zunehmender Menge dosiert und danach die restliche Menge der Monomerenemulsion in üblicher Weise stetig zugefahren.

Die DE-A 19628142 offenbart wässrige Polymerisatdispersionen mit Feststoffgehalten ≥ 50 Gew.-% und bimodaler Teilchengrößenverteilung. Die Herstellung erfolgt durch Zusatz einer Monomerenminiemulsion (mittlere Tröpfchengröße 10 bis 500 nm) während der Polymerisation. Allerdings erfordert die Herstellung einer Monomerenminiemulsion im technischen Maßstab zusätzliche kostenintensive Homogenisiereinheiten, wie beispielsweise Disperserscheiben oder Ultraschalleinrichtungen.

Die DE-A 4307683 beschreibt ein aufwendiges und komplexes Verfahren zur Herstellung einer wässrigen Polymerisatdispersion mit einer Feststoffvolumenkonzentration von ≥ 50 Vol.-%. Kennzeichnend für dieses Verfahren ist, dass eine Polymerisatausgangsdispersion, bei der wenigstens 99,6 Gew.-% der Polymerisatteilchen einen Teilchendurchmesser ≥ 90 und ≤ 500 nm aufweisen, vor Beginn der eigentlichen Emulsionspolymerisation im Polymerisationsgefäß vorgelegt wird. Die nachfolgende Emulsionspolymerisation ist charakterisiert durch ein zweistufigen Monomerenzulauf. Die resultierende wässrige Polymerisatdispersion weist eine polymodale Teilchengrößenverteilung auf. Die DE-A 4307683 gibt ferner einen guten Überblick über den weiteren Stand der Technik.

Aus der DE-A 3147008 ist ein Verfahren zur Herstellung von wässrigen bimodalen Polymerisatdispersionen mit einem Feststoffgehalt ≥ 50 Gew.-% bekannt, bei welchem dem Reaktionsgefäß vor dem eigentlichen Emulsionspolymerisationsprozeß eine Abmischung zweier Polymerisatdispersionen unterschiedlicher mittlerer Teilchengröße zugegeben werden. Nachteilig an dem Verfahren ist, dass zwei wässrige Polymerisatdispersionen vorgehalten werden müssen.

Die DE-A 3319340 beschreibt ein Verfahren zur Herstellung bi- oder polymodaler wässriger Polymerisatdispersionen mit einem Feststoffgehalt von bis zu 59 Gew.-%. Kennzeichnend für das Verfahren ist, dass während der Emulsionspolymerisation dem Reaktionsgemisch eine Saatlatex zugeführt werden muss bevor der Monomerenumsatz 40 % überschreitet.

In EP-A 784060 wird ein Verfahren zu Herstellung bimodaler wässriger Polymerisatdispersionen mit einem Feststoffgehalt ≥ 67 Gew.-% und einer Viskosität < 2000 mPa*s offenbart. Das Verfahren zeichnet sich dadurch aus, dass in einem Reaktionsgefäß bei Polymerisationstemperatur eine wässrige Initiatorlösung ohne Emulgator vorgelegt und anschließend eine Emulgator enthaltende Monomerenmischung zugeführt wird. Verfahrenswesentlich ist, dass nachdem 40 bis 60 Gew.-% der Monomerenmischung dem Polymerisationsgemisch zudosiert wurden, dem Polymerisationsgemisch eine zusätzliche Menge Emulgator zugegeben wird.

Nachteilig an den vorgenannten Verfahren ist, dass sie häufig zwar im Labormaßstab gute Ergebnisse liefern aber für den technischen Maßstab zu komplex oder nicht in ausreichendem Maße reproduzierbar sind und darüber hinaus lange Zykluszeiten aufweisen.

Der vorliegenden Erfindung lag die Aufgabe zugrunde, ein Verfahren zur Herstellung von wässrigen Polymerisatdispersionen mit einem Feststoffgehalt ≥ 50 Gew.-% zur Verfügung zu stellen, welches die Nachteile des Standes der Technik nicht oder lediglich in vermindertem Ausmaß aufweist.

Demgemäss wurde das eingangs definierte Verfahren gefunden.

Die Gesamtmenge an entionisiertem Wasser setzt sich aus den Teilmengen 1 und 2 zusammen und beträgt erfindungsgemäß ≤ 100 Gew.-Teile pro 100 Gew.-Teilen an insgesamt eingesetzten Monomeren. Häufig beträgt die Gesamtmenge an entionisiertem Wasser ≤ 80 Gew.-Teile, ≤ 70 Gew.-Teile, ≤ 65 Gew.-Teile, ≤ 60 Gew.-Teile, ≤ 55 Gew.-Teile, ≤ 50 Gew.-Teile oder ≤ 45 Gew.-Teile, bezogen auf 100 Gew.-Teile an insgesamt eingesetzten Monomeren. Dabei beträgt die Teilmenge 1 an entionisiertem Wasser häufig 2,0 bis 30 Gew.-Teile und oft 5,0 bis 20 Gew.-Teile, jeweils bezogen auf 100 Gew.-Teile an insgesamt eingesetzten Monomeren.

Die im Polymerisationsgefäß vorgelegte Mischung enthält 0,001 bis 0,5 Gew.-Teile, häufig 0,001 bis 0,2 Gew.-Teile und oft 0,005 bis 0,1 Gew.-Teile einer Polymersaat mit einem gewichtsmittleren Teilchendurchmesser ≤ 100 nm. Der gewichtsmittlere Teilchendurchmesser der eingesetzten Polymersaat beträgt häufig ≤ 80 nm oder ≤ 60 nm und insbesondere ≤ 50 nm oder ≤ 40 nm. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Vorteilhaft ist es, wenn die verwendete Polymersaat monomodal ist und eine enge Teilchengrößenverteilung aufweist. Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ $[D_{w50}/D_{N50}]$ ≤ 2,0, bevorzugt ≤ 1,5 und insbesondere bevorzugt ≤ 1,2 oder ≤ 1,1 ist.

Üblicherweise wird die Polymersaat in Form einer wässrigen Polymerdispersion eingesetzt. Die vorgenannten Mengenangaben beziehen sich dabei auf den Polymerfeststoffanteil der wässrigen Polymersaatdispersion; sie sind daher als Gew.-Teile Polymersaatfeststoff, bezogen auf 100 Gew.-Teile Monomere angegeben.

Die Herstellung einer Polymersaat ist dem Fachmann bekannt und erfolgt üblicherweise dergestalt, dass eine relativ kleine Menge an Monomeren sowie eine relativ große Menge an Emulgatoren gemeinsam mit entionisiertem Wasser in einem Reaktionsgefäß vorgelegt und bei Reaktionstemperatur eine ausreichende Menge an Polymerisationsinitiator zugegeben wird.

Erfindungsgemäß bevorzugt wird eine Polymersaat mit einer Glasübergangstemperatur ≥ 50 °C, häufig ≥ 60 °C oder ≥ 70 °C und oft ≥ 80 °C oder ≥ 90 °C eingesetzt. Insbesondere bevorzugt ist eine Polystyrol- oder eine Polymethylmethacrylat-Polymersaat.

Die Dispergiermittelmenge der in der Polymerisationsstufe A eingesetzten Reaktionsmischung beträgt 0,0001 bis 0,1 Gew.-Teile, bevorzugt 0,0002 bis 0,07 Gew.-Teile und insbesondere bevorzugt 0,0004 bis 0,05 Gew.-Teile, jeweils bezogen auf 100 Gew.-Teile an insgesamt eingesetzten Monomeren.

Die Menge an Monomeren beträgt in der Polymerisationsstufe A 0,5 bis 10 Gew.-Teile, bevorzugt 1,0 bis 7,5 Gew.-Teile und insbesondere bevorzugt 1,5 bis 5,0 Gew.-Teile.

Die Durchführung der Polymerisationsstufe A erfolgt dergestalt, dass die genannten Komponenten in einem Reaktionsgefäß vorgelegt werden und die radikalische Polymerisation durch Zugabe eines geeigneten radikalischen Polymerisationsinitiators initiiert wird. Verfahrenswesentlich ist, dass die Monomeren bis zu einem Umsatz von wenigstens 80 % polymerisiert werden. Günstiger ist jedoch ein Monomerenumsatz ≥ 90 %, ≥ 95 % oder ≥ 98 %. Die Bestimmung des Monomerenumsatzes ist dem Fachmann bekannt und erfolgt beispielsweise durch kalorimetrische Methoden.

Dem aus der Polymerisationsstufe A erhaltenen Reaktionsgemisch wird unter Polymerisationsbedingungen, d.h. in Anwesenheit eines geeigneten radikalischen Polymerisationsinitiators, eine Monomerenemulsion enthaltend die Teilmenge 2 an entionisiertem Wasser, 0,1 bis 5,0 Gew.-Teile, insbesondere 0,5 bis 3,0 Gew.-Teile Dispergiermittel sowie 90 bis 99,5 Gew.-Teile, bevorzugt 92,5 bis 99,0 Gew.-Teile und insbesondere bevorzugt 95,0 bis 98,5 Gew.-Teile Monomere kontinuierlich oder diskontinuierlich, zugeführt. Vorteilhaft am erfindungsgemäßen Verfahren ist, dass die Zuführung der Monomerenemulsion rasch erfolgen kann, wobei die Zuführung im wesentlichen nur durch die maximal mögliche Reaktionswärmeabfuhr des Polymerisationsgefäßes begrenzt wird.

Als geeignete radikalische Polymerisationsinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis (amidinopropyl)dihydrochlorid (entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge an Polymerisationsinitiator in Polymerisationsstufe A 0,01 bis 0,5 Gew.-Teile und insbesondere 0,05 bis 0,2 Gew.-Teile und in Polymerisationsstufe B 0,05 bis 5,0 Gew.-Teile und insbesondere 0,1 bis 1,0 Gew.-Teile, jeweils bezogen auf 100 Gew.-Teile an insgesamt eingesetzten Monomeren.

Die Art und Weise, in der der Polymerisationsinitiator dem Polymerisationsgemisch zugegeben wird, ist hinsichtlich des Erfolgs des erfindungsgemäßen Verfahrens eher von untergeordneter Bedeutung. Der Polymerisationsinitiator kann sowohl in Polymerisationsstufe A als auch in Polymerisationsstufe B vollständig im Polymerisationsgefäß vorgelegt, als auch nach Maßgabe seines Verbrauchs im Verlauf der radikalisch wässrigen Emulsionspolymerisation kontinuierlich oder stufenweise zugesetzt werden. Im einzelnen hängt dies in an sich dem Fachmann bekannter Weise sowohl von der chemischen Natur des Initiatorsystems als auch von der Polymerisationstemperatur ab.

Zur Einstellung des Molekulargewichtes können gegebenenfalls zusätzlich dem Fachmann bekannte Molekulargewichtsregler, üblicherweise in Mengen von 0,1 bis 5 Gew.-%, bezogen auf die Gesamtmengen der Monomeren, beispielsweise Alkohole, wie Butendiol oder iso-Propanol, Mercaptoverbindungen, wie 2-Mercaptoethanol oder tert.-Dodecylmercaptan oder Haloformverbindungen, wie Bromoform oder Chloroform, zugesetzt werden.

Als Reaktionstemperatur für die radikalische wässrige Emulsionspolymerisation in Polymerisationsstufe A und B kommt der gesamte Bereich von 0 bis 170 °C in Betracht. Dabei werden in der Regel Temperaturen von 50 bis 120 °C, häufig 60 bis 110 °C und oft ≥ 70 bis 100 °C angewendet. Die radikalische wässrige Emulsionspolymerisation kann bei einem Druck kleiner, gleich oder größer 1 bar (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder.noch höhere Werte einnehmen. Werden Emulsionspolymerisationen im Unterdruck durchgeführt, werden Drücke von ≤ 950 mbar, häufig von ≤ 900 mbar und oft ≤ 850 mbar (absolut) eingestellt. Vorteilhaft wird die

radikalische wässrige Emulsionspolymerisation sowohl in Polymerisationsstufe A als auch in Polymerisationsstufe B unter Inertgasatmosphäre, wie beispielsweise unter Stickstoff oder Argon durchgeführt.

Üblicherweise werden die Monomeren in Polymerisationsstufe B ebenfalls bis zu einem Umsatz von wenigstens 80 % polymerisiert, wobei jedoch in der Regel ein Monomerenumsatz ≥ 90 %, ≥ 95 % oder ≥ 98 % bevorzugt wird.

Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt und/oder den wässrigen Polymerisatdispersionen weitere übliche Zusatzstoffe, wie beispielsweise bakterizide oder schaumdämpfende Additive zugesetzt.

Zur Herstellung der wässrigen Polymerisatdispersionen kommen insbesondere in einfacher Weise radikalisch polymerisierbare ethylenisch ungesättigte Monomere in Betracht, wie beispielsweise Ethylen, vinylaromatische Monomere, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -din-butylester, Nitrile a,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die Gesamtmonomerenmenge, einen Anteil von mehr als 50 Gew.-%, bevorzugt mehr als 80 Gew.-% auf sich vereinen. In aller Regel weisen diese Monomeren in Wasser bei Normalbedingungen [20°C, 1 bar (absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino) ethylmethacrylat, N-(3-N',N'-Dimethylaminopropyl)methacrylamid und 2-(1-Imidazolin-2-onyl)ethylmethacrylat. Im Normalfall werden die vorgenannten Monomeren lediglich als modifizierende Monomere in Mengen, bezogen auf die Gesamtmonomerenmenge, von weniger als 10 Gew.-%, bevorzugt weniger als 5 Gew.-% eingesetzt.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester'zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat.sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen von bis 10 zu Gew.-%, bevorzugt jedoch weniger als 5 Gew.-%, jeweils bezogen auf die Gesamtmonomerenmenge, verwendet.

Erfindungsgemäß besonders günstig einsetzbare Monomerenmischungen sind solche, die

- 50 bis 99,9 Gew.-% Ester der Acryl- und/oder Methacrylsäure mit 1 bis 12 C-Atome aufweisenden Alkanolen und/oder Styrol, oder

- 50 bis 99,9 Gew.-% Styrol und/oder Butadien, oder

- 50 bis 99,9 Gew.-% Vinylchlorid und/oder Vinylidenchlorid, oder

- 40 bis 99,9 Gew.-% Vinylacetat, Vinylpropionat und/oder Ethylen

enthalten.

Insbesondere sind erfindungsgemäß solche Monomerenmischungen einsetzbar, die

- 0,1 bis 5 Gew.-% wenigstens eine 3 bis 6 C-Atome aufweisende α,β-monoethylenisch ungesättigte Mono- und Dicarbonsäure und/oder deren Amid und

  50 bis 99,9 Gew.-% wenigstens ein Ester der Acryl- und/oder Methacrylsäure mit 1 bis 12 C-Atome aufweisenden Alkanolen und/oder Styrol, oder

- 0,1 bis 5 Gew.-% wenigstens eine 3 bis 6 C-Atome aufweisende α,β-mono-ethylenisch ungesättigte Mono- und Dicarbonsäure und/oder deren Amid und

  50 bis 99,9 Gew.-% Styrol und/oder Butadien, oder

- 0,1 bis 5 Gew.-% wenigstens eine 3 bis 6 C-Atome aufweisende α,β-monoethylenisch ungesättigte Mono- und Dicarbonsäure und/oder deren Amid und

  50 bis 99,9 Gew.-% Vinylchlorid und/oder Vinylidenchlorid, oder

- 0,1 bis 5 Gew.-% wenigstens eine 3 bis 6 C-Atome aufweisende α,β-monoethylenisch ungesättigte Mono- und Dicarbonsäure und/oder deren Amid und

  40 bis 99,9 Gew.-% Vinylacetat, Vinylpropionat und/oder Ethylen

enthalten.

Von Bedeutung ist, dass die Monomeren bzw. Monomerenmischungen in den Polymerisationsstufen A und B gleich oder verschieden sein können. Auch ist es in Polymerisationsstufe B möglich, die Monomeren bzw. Monomerenmischungen in der dem Fachmann bekannten Stufen- oder Gradientenfahrweise dem aus Polymerisationsstufe A erhaltenen. Reaktionsgemisch zuzuführen.

Abhängig vom beabsichtigten Einsatzzweck werden wässrige Polymerisatdispersionen benötigt, deren Polymerisate Glasübergangstemperaturen innerhalb bestimmter Bereiche liegen. Durch geeignete Auswahl der in den Polymeristionsstufen A und B zu polymerisierenden Monomeren ist es dem Fachmann möglich, gezielt Polymerisate herzustellen, deren Glasübergangstemperaturen im gewünschten Bereich liegen. An dieser Stelle sei festgehalten, dass im Rahmen dieser Schrift der Begriff Monomer auch Monomerenmischungen und der Begriff Polymerisat auch Copolymerisate umfassen soll.

Sollen beispielsweise die Polymerisate der wässrigen Polymeriatdispersionen als Klebstoff, insbesondere Haftklebstoff eingesetzt werden, wird die Zusammensetzung des zu polymerisierenden Monomerengemisches so gewählt, dass die gebildeten Polymerisate eine Glasübergangstemperatur < 0 °C, häufig ≤ -5 °C und oft ≤ -10 °C aufweisen.

Bei Verwendung der Polymerisate als Bindemittel werden die Zusammensetzungen der zu polymerisierenden Monomerengemische so gewählt, dass die gebildeten Polymerisate Glasübergangstemperaturen von -60°C bis +50 °C und bei Verwendung als Additiv in Zement- und Mörtelformulierungen Glasübergangstemperaturen von -15 °C bis +30 °C aufweisen.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Bd. 190, Seite 1, Gleichung 1) mit zunehmendem Molekulargewicht zustrebt. Die Glasübergangstemperatur wird nach dem DSC-Verfahren ermittelt (Differential Scanning Calorimetry, 20 K/min, midpoint-Messung, DIN 53 765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots\ x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die Tg-Werte

für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989.

Die im Rahmen des erfindungsgemäßen Verfahrens verwendeten Dispergiermittel sind in der Lage sowohl die Monomerentröpfchen als auch die Polymerisatteilchen in der wässrigen Phase dispers verteilt zu halten und so die Stabilität der erzeugten wässrigen Polymerisatdispersion zu gewährleisten. Als solche kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Seiten 411 bis 420, Georg-Thieme-Verlag, Stuttgart, 1961. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Gebräuchliche Emulgatoren sind z.B. ethoxilierte Mono-, Di- und Tri-Alkylphenole (EO-Grad: 3 bis 50, Alkylrest: $C_4$ bis $C_{12}$), ethoxilierte Fettalkohole (EO-Grad: 3 bis 50; Alkylrest: $C_8$ bis $C_{36}$) sowie Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Seiten 192 bis 208, Georg-Thieme-Verlag, Stuttgart, 1961.

Als grenzflächenaktive Substanzen haben sich ferner Verbindungen der allgemeinen Formel I

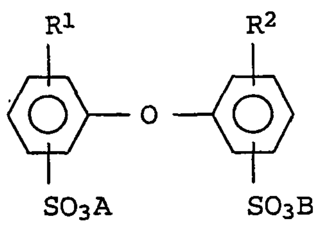

(I),

worin $R^1$ und $R^2$ $C_4$- bis $C_{24}$-Alkyl bedeuten und einer der Reste $R^1$ oder $R^2$ auch für Wasserstoff stehen kann, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder H-Atome, wobei $R^1$ und $R^2$ nicht beide gleichzeitig H-Atome sind. A und B sind bevorzugt Natrium-, Kalium -oder Ammoniumionen, wobei Natriumionen besonders bevorzugt sind. Besonders vorteilhaft sind Verbindungen I, in denen A und B Natriumionen, $R^1$ ein verzweigter Alkylrest mit 12 C-Atomen und $R^2$ ein H-Atom oder $R^1$ sind. Häufig werden technische Gemische verwendet, die einen Anteil von 50 bis 90 Gew.-% des monoalkylierten Produktes aufweisen, beispielsweise Dowfax® 2A1 (Marke der Dow Chemical Company). Die Verbindungen I sind allgemein bekannt, z.B. aus US-A 4 269 749, und im Handel erhältlich.

Bevorzugt werden für das erfindungsgemäße Verfahren nichtionische und/oder anionische Dispergiermittel verwendet.

Die erfindungsgemäßen wässrigen Polymerisatdispersionen weisen in der Regel eine bimodale Teilchengrößenverteilung auf. Dabei liegt üblicherweise ein Maximum im Teilchengrößenbereich <'400 nm, häufig ≤ 300 nm und oft ≤ 200 nm und ein Maximum im Teilchengrößenbereich ≥ 400 nm, häufig ≥ 500 nm und oft ≥ 600 nm. In der Regel liegt der Gewichtsanteil der Polymerisatteilchen mit einem gewichtsmittleren Teilchendurchmesser < 400 nm bei ≤ 50 Gew.-%, häufig ≤ 45 Gew.-% und oft ≤ 40 Gew.-%. Die Bestimmung der Teilchengrößenverteilung erfolgt in der Regel ebenfalls nach der Methode der analytischen Ultrazentrifuge.

Durch das erfindungsgemäße Verfahren sind wässrige Polymerisatdispersionen zugänglich, deren Feststoffgehalt ≥ 50 Gew.-% oder ≥ 55 Gew.-%, häufig ≥ 60 Gew.-% oder ≥ 65 Gew.-% und oft ≥ 70 Gew.-% ist.

Wässrige Polymerisatdispersionen, welche nach dem beschriebenen erfindungsgemäßen Verfahren hergestellt werden, eignen sich als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die dem erfindungsgemäßen Verfahren zugänglichen Dispersionen auch zur Modifizierung von Zement- und Mörtelformulierungen nutzen.

Auch sei festgehalten, daß die erfindungsgemäß erhältlichen wässrigen Dispersionen in einfacher Weise zu redispergierbaren Polymerisatpulvern trockenbar sind (z.B. Gefriertrocknung oder Sprühtrocknung). Dies gilt insbesondere dann, wenn die Glasübergangstemperatur der Polymerisatteilchen ≥ 50 °C, vorzugsweise ≥ 60 °C, besonders bevorzugt ≥ 70 °C, ganz besonders bevorzugt ≥ 80 °C und insbesondere bevorzugt ≥ 90 °C bzw. ≥ 100 °C beträgt.

Das vorliegende erfindungsgemäße Verfahren zeichnet sich durch seine einfache Durchführbarkeit, hohe Reproduzierbarkeit und kurze Zykluszeiten aus. Ferner wird durch die vorliegende Erfindung ein Verfahren zur Verfügung gestellt, welches durch Vorlage nur einer Polymersaat mit einem gewichtsmittleren Teilchendurchmesser ≤ 100 nm den Zugang zu bimodalen Polymerisatdispersionen ermöglicht, deren Gewichtsanteil an Polymerisatteilchen mit einem gewichtsmittleren Teilchendurchmesser ≥ 400 nm in der Regel > 50 Gew.-% beträgt. Auch werden wässrige Polymerisatdispersionen mit einem Feststoffgehalt ≥ 50 Gew.-% erhalten; welche sich durch niedrige Koagulatgehalte auszeichnen.

Beispiele

Analytik

Die Feststoffgehalte wurden bestimmt, indem eine aliquote Menge 6 Stunden bei 140 °C in einem Trockenschrank getrocknet wurde. Es wurden jeweils zwei separate Messungen durchgeführt. Der in den jeweiligen Beispielen angegebene Wert stellt den Mittelwert der beiden Messergebnisse dar.

Die Teilchengrößen bzw. deren Verteilung wurden nach der Methode der Analytischen Ultrazentrifuge (W. Mächtle, Makromolekulare Chemie, Bd. 185 (1984) Seiten 1025 bis 1039) bestimmt.

Die angegebenen Viskositätswerte (mPa*s) wurden nach Brookfield gemäß ISO 2555 mit dem Rotationsviskosimeter bestimmt.

Die Koagulatgehalte wurden aus der Bestimmung des Siebrückstandes ermittelt, wobei in Abänderung von DIN 537.86 jeweils 1 kg der wässrigen Polymerisatdispersion über ein Sieb der Maschenweite 0,125 mm filtriert wurden. Der Siebrückstand wurde mit entionisiertem Wasser gewaschen, dann getrocknet und danach gewogen. Die Angaben erfolgen in Prozent, bezogen auf die wässrige Polymeriatdispersion. Es wurden jeweils zwei separate Messungen durchgeführt. Der in den jeweiligen Beispielen angegebene Wert stellt den Mittelwert der beiden Messergebnisse dar.

Die K-Werte der Polymerisate wurden generell nach H. Fikentscher, Cellulosechemie 1932 (13) Seiten 58 bis 64 und Seiten 71 bis 74. bestimmt, wobei $K = k \times 10^3$ bedeutet. Die Messungen erfolgten bei 25 °C mit einer 1 gew.-%igen Lösung der Polymerisate in THF (entsprechend DIN ISO 1628-1).

Beispiel 1

In einem 1 $m^3$-Polymerisationsgefäß mit Rührer wurden bei 20 bis 25 °C (Raumtemperatur)

| | |
|---|---|
| 85,80 kg | entionisiertes Wasser, |
| 0,10 kg | eines wässrigen Polymerlatex (hergestellt durch radikalisch initiierte Emulsionspolymerisation von Styrol; Polymerfeststoffgehalt 33 Gew.-%) mit einem gewichtsmittleren Teilchendurchmesser $D_{w50}$ von 30 nm, |
| 0,02 kg | p-Dodecylphenylsulfonat-Natriumsalz, |
| 0,45 kg | Styrol |
| 1,64-kg | Methylmethacrylat |
| 1,58 kg | Vinylacetat |
| 16,36 kg | 2-Ethylhexylacrylat, und |
| 10,50 kg | Zulauf II |

vorgelegt, unter Rühren und Stickstoffatmosphäre auf 85 °C erhitzt und 15 Minuten bei dieser Temperatur gerührt. Der Monomerenumsatz betrug > 95 %. Anschließend wurden unter Rühren und Beibehaltung der Reaktionstemperatur gleichzeitig beginnend, der Rest von Zulauf. II innerhalb 4 Stunden und Zulauf I mit einem gleichbleibenden Zulaufstrom von 231,8 Litern pro Stunde zudosiert. Anschließend wurde das Reaktionsgemisch auf 70 °C abgekühlt und bei dieser Temperatur zeitgleich beginnend innerhalb von 1 Stunde Zulauf III und Zulauf IV parallel zugegeben. Danach wurde für

3 Stunden bei dieser Temperatur und unter weiterem Rühren in das Reaktionsgefäß 4 bar-Wasserdampf eingeleitet, wobei der austretende Wasserdampf zur Abscheidung von flüchtigen Bestandteilen einem Kühler zugeführt wurde. Dabei mitgerissene wässrige Polymerisatdispersion wurde abgetrennt und in das Polymerisationsgefäß zurückgeführt. Anschließend wurde auf Raumtemperatur abgekühlt.

Zulauf I ist eine wässrige Monomerenemulsion hergestellt aus:

| | |
|---|---|
| 74,90 kg | entionisiertem Wasser |
| 20,10 kg | einer 35 gew.-%igen wässrigen Lösung des Natriumsalzes eines Schwefelsäurehalbesters von ethoxiliertem Iso-octylphenol, mittlerer Ethoxilierungsgrad: 25 [Emulphor® NPS, Marke der BASF AG] |
| 4,95 kg | einer 25 gew.-%igen wässrigen Lösung von Natriumvinylsulfonat |
| 14,74 kg | einer 20 gew.-%igen wässrigen Lösung von Natriumlaurylsulfonat |
| 14,03 kg | einer 10 gew.-%igen wässrigen Lösung von Natriumhydroxyd |
| 13,33 kg | Styrol |
| 53,36 kg | Methylmethacrylat |
| 53,38 kg | Vinylacetat |
| 528,71 kg | 2-Ethylhexylacrylat, und |
| 3,57 kg | Acrylsäure |

Zulauf II:

| | |
|---|---|
| 65,50 kg | einer 7 gew.-%igen wässrigen Lösung von Natriumperoxodisulfat |

Zulauf III:

| | |
|---|---|
| 6,97 kg | einer 10 gew.-%igen wässrigen Lösung von tert.-Butylhydroperoxid |

Zulauf IV ist eine Reduktionsmittellösung hergestellt aus:

| | |
|---|---|
| 0,69 kg | Natriumbisulfit |
| 0,43 kg | Aceton, und |
| 11,10 kg | entionisiertem Wasser |

Zur Prüfung der Reproduzierbarkeit wurde der Polymerisationsansatz insgesamt fünfmal wiederholt. Wie aus Tabelle 1 ersichtlich ist, zeigen die dabei erhaltenen Dispersionen D1 bis D5 nur geringe Abweichungen bei den bestimmten Werten, wie Feststoffgehalten, K-Werten, Lage der beiden Maxima bei der Teilchen-größenverteilung, Koagulatgehalten oder Viskositäten.

Vergleichsbeispiel V1 (analog Beispiel 1 der DE-A 19633967)

Beispiel 1 wurde wiederholt mit der Ausnahme, dass im Polymerisationsgefäß lediglich

| | |
|---|---|
| 85,80 kg | entionisiertes Wasser, |
| 0,02 kg | p-Dodecylphenylsulfonat-Natriumsalz, und |
| 10,50 kg | Zulauf II |

vorgelegt wurden und Zulauf I aus

| | |
|---|---|
| 74,90 kg | entionisiertem Wasser |
| 20,10 kg | einer 35 gew.-%igen wässrigen Lösung von Emulphor® NPS |
| 4,95 kg | einer 25 gew.-%igen wässrigen Lösung von Natriumvinylsulfonat |
| 14,74 kg | einer 20 gew.-%igen wässrigen Lösung von Natriumlaurylsulfonat |
| 14,03 kg | einer 10 gew.-%igen wässrigen Lösung von Natriumhydroxyd |
| 13,78 kg | Styrol |

(fortgesetzt)

| | |
|---|---|
| 55,00 kg | Methylmethacrylat |
| 54,96 kg | Vinylacetat |
| 545,07 kg | 2-Ethylhexylacrylat, und |
| 3,57 kg | Acrylsäure |

bestand. Ferner wurde nach Erreichen einer Reaktionstemperatur von 85 °C Zulauf I für 6 Minuten mit einer Zulaufgeschwindigkeit von 46,36 Litern pro Stunde zudosiert und dann innerhalb von 40 Minuten kontinuierlich auf eine Zulaufgeschwindigkeit von 231,8 Liter pro Stunde erhöht und bis zum Ende von Zulauf I bei dieser Zulaufgeschwindigkeit belassen. Der Rest von Zulauf II wurde zeitgleich beginnend mit Zulauf I dem Polymerisationsgefäß während 5 Stunden kontinuierlich zugegeben. Alle weiteren Verfahrensschritte erfolgten gemäß Beispiel 1. Die aus dem Vergleichsversuch ermittelten Parameter sind ebenfalls in Tabelle 1 aufgelistet.

Tabelle 1: Vergleich der aus den Dispersionen D1 bis D5 und V1 resultierenden Werte

| Dispersion | | D1 | D2 | D3 | D4 | D5 | V1 |
|---|---|---|---|---|---|---|---|
| Feststoffgehalt (Gew.-%) | | 70 | 69 | 71 | 70 | 69 | 70 |
| K-Wert | | 92 | 90 | 89 | 88 | 91 | 85 |
| Teilchengrößenverteilung | Maximum 1 (nm) | 150 | 155 | 160 | 150 | 155 | 210 |
| | Maximum 2 (nm) | 680 | 660 | 650 | 670 | 650 | 720 |
| | Partikel <400nm (Gew.-%) | 38 | 40 | 42 | 37 | 36 | 32 |
| | Partikel ≥ 400nm (Gew.-%) | 62 | 60 | 58 | 63 | 64 | 68 |
| Koagulatgehalt (Gew.-%) | | 0,007 | 0,009 | 0,010 | 0,010 | 0,008 | 0,014 |
| Viskosität (mPa*s) | | 669 | 645 | 682 | 658 | 652 | 635 |
| Wie aus Tabelle 1 ersichtlich ist, unterscheiden sich die erfindungsgemäßen Dispersionen D1 bis D5 von der Vergleichsdispersion V1 im wesentlichen im K-Wert, in der Teilchengrößenverteilung sowie im Koagulatgehalt. Ferner ist wesentlich, dass die Gesamtzykluszeit von V1 im Vergleich zu D1 bis D5 ca. 45 Minuten höher ist. | | | | | | | |

## Patentansprüche

1. Verfahren zur Herstellung einer wässrigen Polymerisatdispersion mit einem Polymerisatfeststoffgehalt ≥ 50 Gew.-% durch radikalisch initiierte wässrige Emulsionspolymerisation von ethylenisch ungesättigten Verbindungen (Monomere), **dadurch gekennzeichnet, dass**

   a) eine Mischung enthaltend

   | | |
   |---|---|
   | Teilmenge 1 | entionisiertes Wasser, |
   | 0,001 bis 0,5 Gew.-Teile | Polymersaat mit einem gewichtsmittleren Teilchendurchmesser ≤ 100 nm, |
   | 0,0001 bis 0,1 Gew.-Teile | Dispergiermittel, und |
   | 0,5 bis 10 Gew.-Teile | Monomere |

   in einem Polymerisationsgefäß vorgelegt wird und die Monomere bis zu einem Umsatz von ≥ 80 % polymerisiert werden [Polymerisationsstufe A], und man
   b) daran anschließend dem erhaltenen Reaktionsgemisch unter Polymerisationsbedingungen eine Monomerenemulsion enthaltend

   | | |
   |---|---|
   | Teilmenge 2 | entionisiertes Wasser, |
   | 0,1 bis 5 Gew.-Teile | Dispergiermittel, und |
   | 90 bis 99,5 Gew.-Teile | Monomere |

zuführt [Polymerisationsstufe B], wobei
c) die Gesamtmenge der zur Polymerisation eingesetzten Monomere 100 Gew.-Teile und die Gesamtmenge an entionisiertem Wasser ≤ 100 Gew.-Teile beträgt.

2. Verfahren nach Anspruch 1, **dadurch gekennzeichnet, dass** die Teilmenge 1 an entionisiertem Wasser 2,0 bis 30 Gew.-Teile beträgt.

3. Verfahren nach einem der Ansprüche 1 oder 2, **dadurch gekennzeichnet, dass** als Dispergiermittel Emulgatoren verwendet werden.

4. Verfahren nach Anspruch 3, **dadurch gekennzeichnet, dass** als Dispergiermittel nichtionische und/oder anionische Emulgatoren verwendet werden.

5. Verfahren nach einem der Ansprüche 1 bis 4, **dadurch gekennzeichnet, dass** die Polymersaat einen gewichtsmittleren Teilchendurchmesser ≤ 50 nm aufweist.

6. Verfahren nach einem der Ansprüche 1 bis 5, **dadurch gekennzeichnet, dass** als Monomere Monomerenmischungen eingesetzt werden, welche

   - 50 bis 99,9 Gew.-% Ester der Acryl- und/oder Methacrylsäure mit 1 bis 12 C-Atome aufweisenden Alkanolen und/oder Styrol, oder
   - 50 bis 99,9 Gew.-% Styrol und/oder Butadien, oder
   - 50 bis 99,9 Gew.-% Vinylchlorid und/oder Vinylidenchlorid, oder
   - 40 bis 99,9 Gew.-% Vinylacetat, Vinylpropionat und/oder Ethylen

   enthalten.

7. Wässrige Polymerisatdispersion erhältlich nach einem Verfahren gemäß einem der Ansprüche 1 bis 6.

8. Verwendung einer wässrigen Polymerisatdispersion gemäß Anspruch 7 als Bindemittel, zur Modifizierung von Zement- und Mörtelformulierungen sowie als Klebstoff.

9. Wässrige Polymerisatdispersion nach Anspruch 7, deren Polymerisat eine Glasübergangstemperatur < 0°C aufweist.

10. Verwendung einer wässrigen Poylmerisatdispersion gemäß Anspruch 9 zur Herstellung von Haftklebstoffen.

## Claims

1. A process for preparing an aqueous polymer dispersion having a polymer solids content ≥ 50% by weight by free-radically initiated aqueous emulsion polymerization of ethylenically unsaturated compounds (monomers), which comprises

   a) charging a mixture comprising

| | |
|---|---|
| portion 1 | of deionized water, |
| from 0.001 to 0.5 part by weight | of polymer seed having a weight-average particle diameter ≤ 100 nm, |
| from 0.0001 to 0.1 part by weight | of dispersant, and |
| from 0.5 to 10 parts by weight | of monomers |

   to a polymerization vessel and polymerizing the monomers to a conversion ≥ 80% [stage A] and
   b) subsequently supplying to the resultant reaction mixture under polymerization conditions a monomer emulsion comprising

| | |
|---|---|
| portion 2 | of deionized water, |

(continued)

| | |
|---|---|
| from 0.1 to 5 parts by weight | of dispersant, and |
| from 90 to 99.5 parts by weight | of monomers |

[stage B], where

c) the total amount of monomers used for the polymerization is 100 parts by weight and the total amount of deionized water is s 100 parts by weight.

**2.** The process according to claim 1, wherein portion 1 of deionized water is from 2.0 to 30 parts by weight.

**3.** The process according to either of claims 1 and 2, wherein said dispersant comprises emulsifiers.

**4.** The process according to claim 3, wherein said dispersant comprises nonionic and/or anionic emulsifiers.

**5.** The process according to any of claims 1 to 4, wherein said polymer seed has a weight-average particle diameter s 50 nm.

**6.** The process according to any of claims to 1 to 5, wherein said monomers comprise monomer mixtures comprising

| | |
|---|---|
| from 50 to 99.9% by weight | of esters of acrylic and/or methacrylic acid with alkanols having from 1 to 12 carbon atoms and/or styrene, or |
| from 50 to 99.9% by weight | of styrene and/or butadiene, or |
| from 50 to 99.9% by weight | of vinyl chloride and/or vinylidene chloride, or |
| from 40 to 99.9% by weight | of vinyl acetate, vinyl propionate and/or ethylene. |

**7.** An aqueous polymer dispersion obtainable by a process according to any of claims 1 to 6.

**8.** The use of an aqueous polymer dispersion according to claim 7 as a binder, for modifying cement formulations or mortar formulations, or as an adhesive.

**9.** The aqueous polymer dispersion according to claim 7 whose polymer has a glass transition temperature < 0°C.

**10.** The use of an aqueous polymer dispersion according to claim 9 for preparing pressure sensitive adhesives.

## Revendications

**1.** Procédé de préparation d'une dispersion aqueuse de polymère avec une teneur en matières solides du polymère ≥ 50 % en poids par polymérisation aqueuse en émulsion, amorcée par voie radicalaire, de composés éthyléniquement insaturés (monomères) **caractérisé en ce que**,

a) un mélange contenant

| | |
|---|---|
| quantité partielle 1 | eau désionisée, |
| 0,001 à 0,5 partie en poids | granules de polymère avec diamètre de particule moyen pondéré ≤ 100 nm, |
| 0,0001 à 0,1 partie en poids | milieu de dispersion, et |
| 0,5 à 10 parties en poids | monomères |

est chargé dans un récipient de polymérisation et les monomères sont polymérisés jusqu'à une conversion ≥ 80 % [étape de polymérisation A], et

b) le mélange réactionnel obtenu est ensuite alimenté [étape de polymérisation B] dans des conditions de polymérisation avec une émulsion de monomères contenant

| | |
|---|---|
| quantité partielle 2 | eau désionisée, |

(suite)

| | |
|---|---|
| 0,1 à 5 parties en poids | milieu de dispersion, et |
| 90 à 99,5 parties en poids | monomères, |

c) la quantité totale des monomères utilisés pour la polymérisation étant de 100 parties en poids et la quantité totale en eau désionisée étant ≤ 100 parties en poids.

**2.** Procédé selon la revendication 1, **caractérisé en ce que** la quantité partielle 1 en eau désionisée est de 2,0 à 30 parties en poids.

**3.** Procédé selon l'une quelconque des revendications 1 ou 2, **caractérisé en ce que** des émulsifiants sont utilisés comme milieu de dispersion.

**4.** Procédé selon la revendication 3, **caractérisé en ce que** des émulsifiants non ioniques et/ou anioniques sont utilisés comme milieu de dispersion.

**5.** Procédé selon l'une quelconque des revendications 1 à 4, **caractérisé en ce que** les granules de polymère présentent un diamètre de particule moyen pondéré ≤ 50 nm.

**6.** Procédé selon l'une quelconque des revendications 1 à 5, **caractérisé en ce que** des mélanges de monomères qui contiennent :

- 50 à 99,9 % en poids ester de l'acide méthacrylique et/ou acrylique avec des alcanols présentant 1 à 12 atomes de carbone et/ou du styrène, ou
- 50 à 99,9 % en poids styrène et/ou butadiène,
- 50 à 99,9 % en poids chlorure de vinyle et/ou chlorure de vinylidène, ou
- 40 à 99,9 % en poids acétate de vinyle, propionate de vinyle et/ou éthylène

sont utilisés comme monomères.

**7.** Dispersion aqueuse de polymère pouvant être obtenue par un procédé selon l'une quelconque des revendications 1 à 6.

**8.** Utilisation d'une dispersion de polymère aqueuse selon la revendication 7 comme liant, pour la modification de formulations de mortier et de ciment ainsi que comme colle.

**9.** Dispersion aqueuse de polymère selon la revendication 7, dont le polymère présente une température de transition vitreuse < 0°C.

**10.** Utilisation d'une dispersion de polymère aqueuse selon la revendication 9 pour la préparation de colles adhésives de contact.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4130523 A
- DE 19633967 A
- DE 19628142 A
- DE 4307683 A
- DE 3147008 A
- DE 3319340 A
- EP 784060 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- US 4269749 A


### In der Beschreibung aufgeführte Nicht-Patentliteratur


- Analysis of Polymer Dispersions with an Eight-Cell-AUC-Multiplexer: High Resolution Particle Size Distribution and Density Gradient Techniques. **HIERZU S.E. HARDING et al.** Analytical Ultracentrifugation in Biochemistry and Polymer Science. Royal Society of Chemistry, 1992, 147-175
- **G. KANIG.** *Kolloid-Zeitschrift & Zeitschrift für Polymere,* vol. 190 (1), 1
- **T.G. FOX.** *Bull. Am. Phys. Soc.,* 1956, vol. II, 123
- Ullmann's Encyclopädie der technischen Chemie. Verlag Chemie, 1980, vol. 19, 18
- *Ullmann's Ecyclopedia of Industrial Chemistry,* 1992, vol. A21 (5), 169
- **J. BRANDRUP ; E.H. IMMERGUT.** Polymer Handbook. J. Wiley, 1989
- **HOUBEN-WEYL.** Methoden der organischen Chemie. *Makromolekulare Stoffe,* 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **W. MÄCHTLE.** *Makromolekulare Chemie,* 1984, vol. 185, 1025-1039
- **H. FIKENTSCHER.** *Cellulosechemie,* 1932, vol. 13, 58-6471-74